# FASCICULE DE BREVET EUROPEEN

(11) **EP 3 247 539 B1**
(45) Date de publication et mention de la délivrance du brevet: **23.01.2019**
(21) Numéro de dépôt: 15834792.2
(22) Date de dépôt: 23.12.2015
(51) Int. Cl.: B26D 1/02, B23Q 1/44, B26F 3/00

(54) **MACHINE DE DECOUPE PAR JET D'EAU COMPRENANT UN DISPOSITIF DE DEPLACEMENT D'UN PLATEAU DANS UN PLAN**
MASCHINE ZUM FLÜSSIGKEITSSTRAHLSCHNEIDEN MIT EINER VORRICHTUNG ZUR BEWEGUNG EINER PLATTE AUF EINER EBENE
MACHINE FOR FLUID JET CUTTING WITH A DEVICE FOR MOVING A PLATE ON A PLAN

(30) Priorité: 22.01.2015 FR 1550521
(43) Date de publication de la demande: 29.11.2017
(73) Titulaire: Hydroprocess, 71100 Chalon sur Saone (FR)
(72) Inventeur: DEREIMS, Philippe, 71100 Chalon sur Saone (FR)
(74) Mandataire: Oudin, Stéphane
(86) Numéro de dépôt international: PCT/FR2015/053749
(87) Numéro de publication internationale: WO 2016/116675

(56) Documents cités:
- EP-A1- 1 637 294
- EP-A2- 1 990 144

## Description

### Domaine technique

La présente invention concerne une machine de découpe par jet d'eau simple, économique, compacte comprenant un dispositif de déplacement d'un plateau dans un plan, particulièrement destinée à la découpe de produits alimentaires. L'invention concerne également le dispositif pour déplacer un plateau dans un plan.

### Technique antérieure

Dans le domaine de la découpe de produits alimentaires, on connaît bien des machines de découpe par jet d'eau constituées d'un bâti sur lequel sont montés un plateau de chargement recevant les produits alimentaires à découper et un chariot se déplaçant longitudinalement et transversalement sur le bâti au-dessus dudit plateau ; ce chariot est actionné par des moteurs électriques ou analogues et porte une tête de coupe constituée par une buse. Lors de la découpe, des projections de fines particules d'eau et de produits alimentaires sont projetées dans l'air et viennent se loger dans les glissières du plateau de chargement, sur les rails du chariot et sur les moteurs électriques ; ce qui rend le nettoyage difficile et nuit considérablement à l'hygiène des découpes. En effet, ces dispositifs de découpe à jet d'eau, bien que nettoyés très fréquemment, sont le siège de foyers de moisissure et de bactéries.

Par ailleurs, les impacts de jets d'eau sous pression et en mouvement contre la surface des produits alimentaires provoquent un nuage de gouttelettes d'eau au niveau de la zone de coupe. Ce nuage ne permet pas de voir les coupes difficiles et donc de vérifier si lesdites coupes sont faites convenablement. De plus, ce nuage augmente l'humidité au niveau de la surface des produits alimentaires à découper, rendant ce type de machines difficilement applicable aux produits alimentaires, qui ne doivent pas être mouillés, tels que, par exemple, des produits de pâtisserie, du chocolat, des pizzas, etc.

Ce type de machines de découpe à tête de coupe mobile nécessitent impérativement d'avoir, d'une part, un dispositif d'aspiration pour limiter l'effet du nuage de gouttelettes d'eau et, d'autre part, des tubulures non rigides donc plus compliquées et coûteuses à mettre en oeuvre. En effet, les tubulures, qui amènent l'eau sous pression depuis la pompe jusqu'à la buse, doivent accompagner au moins un des mouvements du chariot mobile portant ladite tête de découpe.

Afin de remédier à ces inconvénients, on a déjà imaginé des machines de découpe à jet d'eau comprenant une tête de découpe immobile et un plateau mobile se déplaçant sous ladite tête de découpe: c'est le cas, par exemple, du brevet WO 2004/096507 décrivant une machine de découpe par jet d'eau de produits alimentaires comprenant un dispositif permettant de déplacer un produit alimentaire sur une table de coupe ou analogue. Ce dispositif comprend une tête de coupe, constituée par une buse, installée sur un support fixe solidaire d'un bâti et une couronne disposée sous cette tête de coupe et apte à supporter l'objet à couper. Ladite couronne coulisse entre des éléments de guidage parallèles de sorte à pouvoir pivoter et se déplacer dans la direction longitudinale sur lesdits éléments de guidage, ladite couronne étant munie sur sa périphérie d'un bord cranté apte à coopérer avec des moyens d'actionnement crantés disposés le long desdits éléments de guidage permettant la réalisation des mouvements associés de rotation et de de translation de ladite couronne.

Toutefois, ce type de dispositif présente l'inconvénient d'être difficile à mettre en oeuvre et de ne pas être compatible avec les machines de découpe buses multiples car la couronne ne se déplace pas parallèlement à elle-même selon deux axes X et Y.

### Exposé de l'invention

Le but de la présente invention est donc de pallier les inconvénients précédemment cités et de proposer une alternative aux machines de découpe par jet d'eau connues comprenant une tête de coupe composée d'au moins une buse et d'un dispositif pour déplacer un plateau, portant le produit à découper, parallèlement à lui-même selon deux axes X et Y ; cette alternative permettant de limiter la génération d'un nuage de gouttelettes d'eau, d'utiliser des tubulures haute pression rigides tout en étant compatible avec une configuration à buses multiples.

Conformément au premier objet de l'invention, il est donc proposé un dispositif de déplacement dans un plan P d'un plateau parallèlement à lui-même, ledit plateau comportant au moins deux bords opposés parallèles entre eux, ledit dispositif étant remarquable en ce qu'il comporte au moins :
- deux bras parallèles entre eux et mobiles dans un plan parallèle audit plan P, l'un des deux bras étant nommé "maître" et directement mis en mouvement par un premier actionneur, l'autre alors nommé "esclave" étant entraîné en mouvement par le bras "maître" grâce à un organe de liaison reliant entre eux lesdits bras "maître" et "esclave", ledit organe de liaison étant articulé à chacune de ses extrémités aux bras "maître" et "esclave" autour d'axes perpendiculaires audit plan P,
- un organe d'entraînement monté pivotant à l'une des extrémités de chacun desdits bras, autour d'un axe perpendiculaire audit plan P et mis en mouvement par un deuxième actionneur, l'organe d'entraînement associé au bras "maître" coopérant avec un organe d'actionnement disposé le long d'un bord du plateau et l'organe d'entraînement associé au bras "esclave" coopérant avec un organe d'actionnement disposé le long de l'autre bord du plateau.

Selon un mode de réalisation préféré, chacun des deux bras est pivotant à son extrémité opposée à l'organe d'entraînement autour respectivement d'un axe perpendiculaire audit plan P, le premier actionneur étant alors avantageusement un motoréducteur électrique.

Selon une variante de réalisation, chacun des deux bras est coulissant à son extrémité opposée à l'organe d'entraînement selon une direction D perpendiculaire aux deux bords du plateau, le premier actionneur étant alors avantageusement un actionneur linéaire.

De manière avantageuse, l'organe de liaison comporte un actionneur linéaire permettant un rattrapage de jeu permanent entre les bras "maître" et "esclave" et donc entre les organes d'actionnement du plateau et les organes d'entraînement.

Ledit actionneur linéaire est de préférence un vérin du type pneumatique simple effet.

Selon un mode de réalisation préféré, les organes d'actionnement du plateau sont des crémaillères et chaque organe d'entraînement coopérant avec l'organe d'actionnement associé est un pignon cranté.

Les bras "maître" et "esclave" sont de préférence des tubes creux.

Chaque deuxième actionneur est un motoréducteur électrique alimenté par un câble cheminant à l'intérieur de l'un des bras "maître" ou "esclave" associé.

La présente invention a également pour objet une machine de découpe par jet d'eau comportant au moins un bâti, une tête de découpe munie d'au moins une buse immobile solidaire dudit bâti, et une table de découpe disposée sous la buse. Cette machine de découpe est remarquable en ce qu'elle comporte un dispositif de déplacement dans un plan P d'un plateau parallèlement à lui-même selon l'invention et solidaire dudit bâti, et en ce que la table de découpe définit ledit plan P de déplacement du plateau.

Chaque buse est de préférence alimentée en eau sous pression par une tubulure rigide.

De manière avantageuse, la machine de découpe comporte un bac de récupération d'eau de coupe disposé sous la table de découpe avantageusement à l'aplomb de la buse et muni à son extrémité inférieure d'une évacuation, et un groupe de pompage haute pression disposé sous la table de découpe et connecté à l'extrémité libre de la tubulure.

En outre, la machine de découpe comporte de préférence un capot articulé au bâti permettant d'avoir une zone de travail complètement fermée et étanche au fluide et au bruit, ledit capot étant au moins en partie réalisé dans un matériau transparent.

### Description sommaire des figures

D'autres avantages et caractéristiques ressortiront mieux de la description qui va suivre, d'un exemple particulier de réalisation, donné à titre d'exemple non limitatif, d'une machine de découpe par jet d'eau conforme à l'invention, en référence aux dessins annexés sur lesquels :
- la figure 1 est une vue en perspective partielle d'une machine de découpe par jet d'eau conforme à l'invention comprenant un dispositif de déplacement d'un plateau parallèlement à lui-même selon deux axes perpendiculaires,
- la figure 2 est une représentation schématique du dispositif de déplacement d'un plateau représenté sur la figure 1,
- la figure 3 est une représentation schématique d'une variante de réalisation du dispositif de déplacement d'un plateau selon l'invention.

### Meilleure manière de réaliser l'invention technique

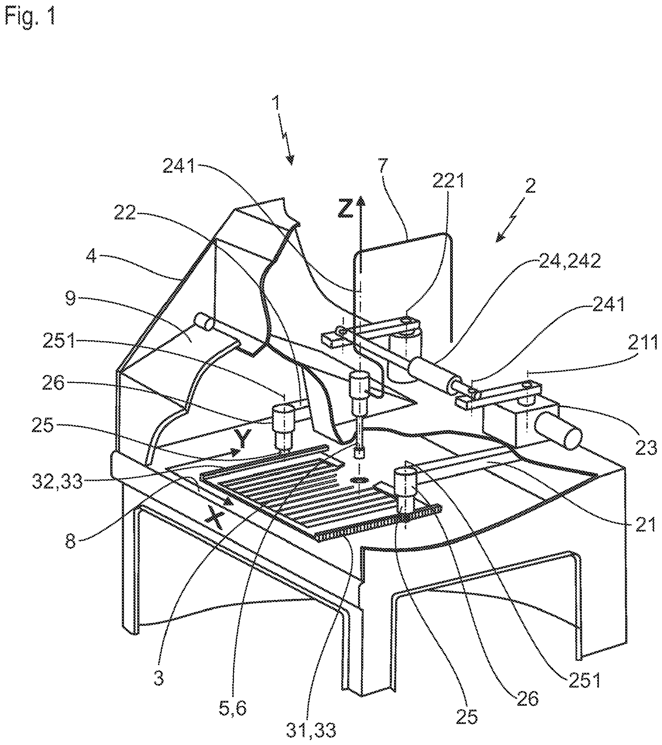

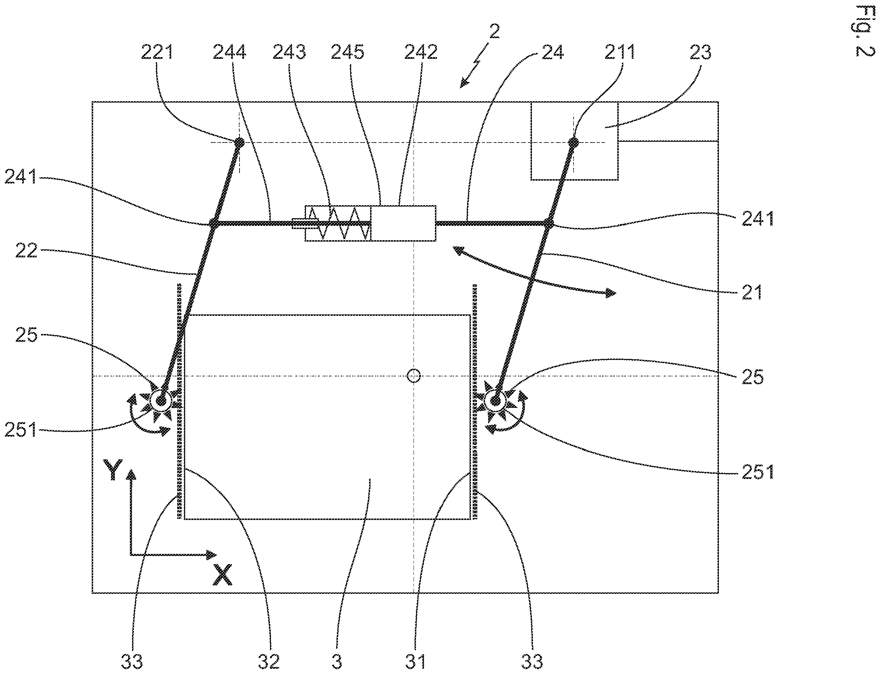

En référence aux figures 1 et 2, la machine de découpe 1 par jet d'eau conforme à l'invention comprenant un dispositif 2 de déplacement d'un plateau 3 parallèlement à lui-même selon deux axes perpendiculaires X et Y, qui va être décrite à titre d'exemple non limitatif, est particulièrement destinée à la découpe de produits alimentaires tels que, par exemple, des gâteaux.

De plus dans ce qui suit, la machine de découpe 1, et plus particulièrement le dispositif 2 de déplacement, sera décrit dans une position pour laquelle le plateau 3 se déplace dans un plan P sensiblement horizontal. Il va de soi que la machine de découpe 1 ou le dispositif 2 de déplacement pourra être utilisé dans une toute autre position sans sortir du cadre de la présente invention.

De même, dans ce qui suit, on va décrire une machine de découpe 1 utilisant de l'eau comme fluide de coupe. Toutefois, il va de soi que la machine de découpe 1 selon l'invention pourra utiliser un tout autre type de fluide de coupe sans sortir du cadre de la présente invention.

La machine de découpe 1 comporte au moins un bâti 4 de forme globalement parallélépipédique, une tête de découpe 5 munie d'au moins une buse 6 immobile solidaire dudit bâti 4 alimentée en eau sous pression par une tubulure 7 rigide, et une table de découpe 8 globalement horizontale, disposée sous la buse 6, munie d'au moins un orifice en son centre pour permettre le passage du jet d'eau de coupe et apte à recevoir le plateau 3.

Toutefois, on comprend bien que, pour des raisons évidentes d'adaptation de la position de la buse 6 en fonction de l'épaisseur de l'objet à découper disposé sur le plateau 3, ladite buse 6 pourra être mobile selon une direction Z perpendiculaire audit plan P et deux axes perpendiculaires X et Y sans sortir du cadre de la présente invention.

Le terme "immobile" désigne dans ce qui suit le fait que la buse 6 de la machine de découpe 1 selon l'invention est immobile selon au moins lesdites deux axes perpendiculaires X et Y.

Par ailleurs, la machine de découpe 1 comporte de préférence :
- un bac de récupération d'eau de coupe, non représenté sur les figures, disposé sous la table de découpe 8 avantageusement à l'aplomb de la buse 6 et muni à son extrémité inférieure d'une évacuation qui est éventuellement connectée à un système d'aspiration non représenté sur les figures, et
- un groupe de pompage haute pression, non représenté sur les figures, disposé sous la table de découpe 8 et connecté à l'extrémité libre de la tubulure 7.

La machine de découpe 1 comporte en outre le dispositif 2 de déplacement du plateau 3 parallèlement à lui-même selon deux axes perpendiculaires X et Y, ledit plateau 3, qui est apte à recevoir le produit à découper, ayant au moins deux bords 31,32 opposés parallèles entre eux, étant au moins en partie ajouré, et se déplaçant en appui sur un plan P de déplacement déterminé par la table de coupe 8 grâce à des plots, non représentés sur les figures, fixés à chacun de ses angles.

On entend ici par "déplacement du plateau 3 parallèlement à lui-même" un déplacement qui ne comporte aucune rotation du plateau 3.

Ledit dispositif 2 de déplacement du plateau 3 muni d'un organe d'actionnement 33 le long de chacun de ses bords 31,32, comporte au moins :
- deux bras 21,22 parallèles entre eux, chacun d'entre eux étant montés pivotant à l'une de leurs extrémités sur le bâti 4, autour respectivement d'un axe 211,221 sensiblement vertical et perpendiculaire audit plan P, l'un 21 des deux bras 21,22 étant nommé "maître" et directement mis en mouvement par un premier actionneur 23, l'autre 22 alors nommé "esclave" étant entraîné en mouvement par le bras "maître" 21 grâce à un organe de liaison 24 reliant entre eux les bras "maître" 21 et "esclave" 22,
- un organe d'entraînement 25 monté pivotant à l'extrémité libre de chacun desdits bras 21,22, autour d'un axe 251 sensiblement vertical et perpendiculaire audit plan P de déplacement et mis en mouvement par un deuxième actionneur 26, l'organe d'entraînement 25 associé au bras "maître" 21 coopérant avec un organe d'actionnement 33 disposé le long du bord 31 du plateau 3 et l'organe d'entraînement 25 associé au bras "esclave" 22 coopérant avec un organe d'actionnement 33 disposé le long de l'autre bord 32 du plateau 3.

Pour des raisons de résistance mécanique et de légèreté, les bras "maître" 21 et "esclave" 22 sont avantageusement des tubes creux.

Le premier actionneur 23 est avantageusement un motoréducteur électrique à arbre creux permettant de recevoir l'une des extrémités du bras "maître" 21 et un fonctionnement réversible pour faire pivoter avec précision ce dernier dans un sens ou dans l'autre autour de l'axe 23. Ce type de motoréducteur présente en outre l'avantage d'être très compact.

Selon un mode de réalisation préféré, les organes d'actionnement 33 du plateau 3 disposés le long de ses bords 31,32 sont des crémaillères et chaque organe d'entraînement 25 coopérant avec l'organe d'actionnement 33 associé est un pignon cranté.

L'Homme du métier n'aura aucune difficulté pour déterminer la forme et le pas des dents adaptés pour garantir un déplacement précis du plateau 3 lors de la rotation des organes d'actionnement 33.

Chaque deuxième actionneur 26 est avantageusement un motoréducteur électrique alimenté par un câble, non représenté sur les figures, cheminant à l'intérieur de l'un des bras "maître" 21 ou "esclave" 22 associé afin de ne pas créer des zones de rétention difficiles à nettoyer et aptes à retenir de fines particules de produits projetées lors de l'impact du jet d'eau de coupe et pouvant engendrer un développement microbien non désirable.

L'organe de liaison 24 est articulé à chacune de ses extrémités aux bras "maître" 21 et "esclave" 22 respectivement autour d'axes 241 sensiblement verticaux et perpendiculaires audit plan P. En outre, l'organe de liaison 24 comporte un actionneur linéaire 242 permettant un rattrapage de jeu permanent entre les bras "maître" 21 et "esclave" 22 et donc entre les organes d'actionnement 33 du plateau 3 les organes d'entraînement 25.

En référence à la figure 2, ledit actionneur linéaire 242 est de préférence un vérin du type pneumatique simple effet et comporte un ressort de rappel 243 exerçant un effort tendant à ramener la tige 244 dans la position "rentrée", qui correspond à la position dans laquelle la tige 244 est presque entièrement contenue dans le corps 245 du vérin 242.

Cette configuration permet, d'une part, de rattraper de façon continue le jeu entre les organes d'actionnement 33 du plateau 3 les organes d'entraînement 25, lorsque le vérin 242 est alimenté et, d'autre part, de sortir le plateau 3, par exemple pour le nettoyer, en écartant les bras "maître" 21 et "esclave" 22, lorsque le vérin 242 n'est plus alimenté.

En outre, le ressort de rappel 243 du vérin 242, qui maintient ce dernier en position "rentrée", permet de conserver la position du plateau et d'éviter les chocs lors de la remise en pression dudit vérin 242.

Par ailleurs, les bras "maître" 21 et "esclave" 22 et les organes d'entraînement 25 sont tels que la projection dans un plan horizontal de leur axe 211,221,251 de pivotement respectif forment les quatre angles d'un parallélogramme déformable sous l'action du premier actionneur 23.

Le dispositif 2 de déplacement du plateau 3 comprend en outre une unité de commande, non représentée sur les figures, pour piloter le premier actionneur 23 et les deuxièmes actionneurs 26 afin de réaliser le déplacement du plateau 3 selon les axes X et Y.

On comprend bien que le dispositif 2 de déplacement du plateau 3 permet de réaliser une machine de découpe 1 par jet d'eau compacte et particulièrement facile à nettoyer. En effet, la configuration dudit dispositif 2 de déplacement du plateau 3 offre la possibilité, d'une part, de confiner les premier et deuxièmes actionneurs 23,26 et l'organe de liaison 24 dans des boitiers sensiblement étanches ou isolés de la zone de découpe et, d'autre part, de ne laisser aucun câble d'alimentation apparent dans ladite zone.

Par ailleurs, on comprend bien que, dans la mesure où le plateau 3 se déplace parallèlement à lui-même selon deux axes X et Y, le dispositif 2 de déplacement est parfaitement compatible avec une machine de découpe 1 comportant une pluralité de buses 6 fixes.

Enfin, en référence à la figure 1, la machine de découpe 1 comporte avantageusement un capot 9 articulé au bâti 4 permettant d'avoir une zone de travail complètement fermée et étanche au fluide et au bruit, ledit capot 9 étant de préférence au moins en partie réalisé dans un matériau transparent afin de pouvoir surveiller le processus de découpe.

### Description d'autres modes de réalisation

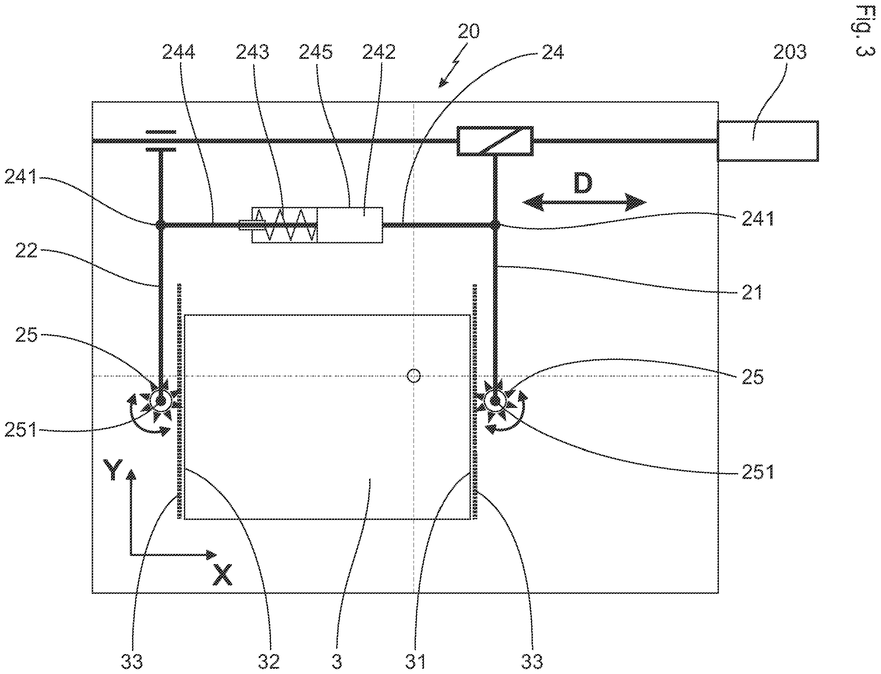

Selon une première variante de réalisation représentée à la figure 3, le dispositif 20 de déplacement du plateau 3 muni d'un organe d'actionnement 33 le long de chacun de ses bords 31,32, est semblable au dispositif 2 de déplacement décrit précédemment et comporte au moins :
- deux bras 21,22 parallèles entre eux, l'un 21 des deux bras 21,22 étant nommé "maître" et directement mis en mouvement par un premier actionneur 203, l'autre 22 alors nommé "esclave" étant entraîné en mouvement par le bras "maître" 21 grâce à un organe de liaison 24 reliant entre eux les bras "maître" 21 et "esclave" 22,
- un organe d'entraînement 25 monté pivotant à l'extrémité libre de chacun desdits bras 21,22, autour d'un axe 251 sensiblement vertical et perpendiculaire audit plan P de déplacement et mis en mouvement par un deuxième actionneur 26, l'organe d'entraînement 25 associé au bras "maître" 21 coopérant avec un organe d'actionnement 33 disposé le long du bord 31 du plateau 3 et l'organe d'entraînement 25 associé au bras "esclave" 22 coopérant avec un organe d'actionnement 33 disposé le long de l'autre bord 32 du plateau 3.

Toutefois, le dispositif 20 de déplacement diffère en ce que chacun des deux bras 21,22 est coulissant à son extrémité opposée à l'organe d'entraînement (25) selon une direction D perpendiculaire aux deux bords (31,32) du plateau (3), ledit premier actionneur 203 étant alors un actionneur linéaire apte à déplacer le bras "maître" 21 selon ladite direction D.

### Possibilité d'application industrielle

On comprend bien que la machine de découpe 1 selon l'invention peut être utilisée pour découper un tout autre type de produits que les produits alimentaires. De même, il est bien évident que le dispositif 2 de déplacement du plateau 3 conforme à l'invention peut être adapté à un tout autre type de découpe tel que, par exemple, la découpe au laser.

Enfin, il va de soi que les exemples de machine de découpe 1 et de dispositif 2 de déplacement du plateau 3 conformes à l'invention qui viennent d'être décrits ne sont que des illustrations particulières, en aucun cas limitatives de l'invention.

## Revendications

1. Dispositif (2,20) de déplacement dans un plan P d'un plateau (3) parallèlement à lui-même, ledit plateau (3) comportant au moins deux bords (31,32) opposés parallèles entre eux, ledit dispositif (2) étant **caractérisé en ce qu'**il comporte au moins :
- deux bras (21,22) parallèles entre eux et mobiles dans un plan parallèle audit plan P, l'un (21) desdits deux bras (21,22) étant nommé "maître" et directement mis en mouvement par un premier actionneur (23,203), l'autre (22) alors nommé "esclave" étant entraîné en mouvement par le bras "maître" (21) grâce à un organe de liaison (24) reliant entre eux lesdits bras "maître" (21) et "esclave" (22), ledit organe de liaison (24) étant articulé à chacune de ses extrémités aux bras "maître" (21) et "esclave" (22) autour d'axes (241) perpendiculaires audit plan P,
- un organe d'entraînement (25) monté pivotant à l'une des extrémités de chacun desdits bras (21,22), autour d'un axe (251) perpendiculaire audit plan P et mis en mouvement par un deuxième actionneur (26), l'organe d'entraînement (25) associé au bras "maître" (21) coopérant avec un organe d'actionnement (33) disposé le long du bord (31) du plateau (3) et l'organe d'entraînement (25) associé au bras "esclave" (22) coopérant avec un organe d'actionnement (33) disposé le long de l'autre bord (32) du plateau (3).

2. Dispositif (2) de déplacement selon la revendication 1 **caractérisé en ce que** chacun des deux bras (21,22) est pivotant à son extrémité opposée à l'organe d'entraînement (25) autour respectivement d'un axe (211,221) perpendiculaire audit plan P.

3. Dispositif (2) de déplacement selon la revendication 2, **caractérisé en ce que** le premier actionneur (23) est un motoréducteur électrique.

4. Dispositif (20) de déplacement selon la revendication 1 **caractérisé en ce que** chacun des deux bras (21,22) est coulissant à son extrémité opposée à l'organe d'entraînement (25) selon une direction D perpendiculaire aux deux bords (31,32) du plateau (3).

5. Dispositif (20) de déplacement selon la revendication 4, **caractérisé en ce que** le premier actionneur (203) est un actionneur linéaire.

6. Dispositif (2,20) de déplacement selon l'une quelconque des revendications 1 à 5 **caractérisé en ce que** l'organe de liaison (24) comporte un actionneur linéaire (242) permettant un rattrapage de jeu permanent entre les bras "maître" (21) et "esclave" (22) et donc entre les organes d'actionnement (33) du plateau (3) et les organes d'entraînement (25).

7. Dispositif (2,20) de déplacement selon la revendication 6, **caractérisé en ce que** l'actionneur linéaire (242) est un vérin du type pneumatique simple effet.

8. Dispositif (2,20) de déplacement selon l'une quelconque des revendications 1 à 7, **caractérisé en ce que** les organes d'actionnement (33) du plateau (3) sont des crémaillères et **en ce que** chaque organe d'entraînement (25) coopérant avec l'organe d'actionnement (33) associé est un pignon cranté.

9. Dispositif (2,20) de déplacement selon l'une quelconque des revendications 1 à 8 **caractérisé en ce que** les bras "maître" (21) et "esclave" (22) sont des tubes creux.

10. Dispositif (2,20) de déplacement selon la revendication 9, **caractérisé en ce que** chaque deuxième actionneur (26) est un motoréducteur électrique alimenté par un câble cheminant à l'intérieur de l'un des bras "maître" (21) ou "esclave" (22) associé.

11. Machine de découpe (1) par jet d'eau comportant au moins un bâti (4), une tête de découpe (5) munie d'au moins une buse (6) immobile solidaire dudit bâti (4), et une table de découpe (8) disposée sous la buse (6), **caractérisée en ce qu'**elle comporte un dispositif (2,20) de déplacement d'un plateau (3) dans un plan P parallèlement à lui-même selon l'une quelconque des revendications 1 à 10 solidaire dudit bâti (4) et **en ce que** la table de découpe (8) définit ledit plan P de déplacement du plateau (3).

12. Machine de découpe (1) par jet d'eau selon la revendication 11, **caractérisée en ce que** chaque buse (6) est alimentée en eau sous pression par une tubulure (7) rigide.

13. Machine de découpe (1) par jet d'eau selon l'une quelconque des revendications 11 ou 12, **caractérisée en ce qu'**elle comporte un bac de récupération d'eau de coupe disposé sous la table de découpe (8) avantageusement à l'aplomb de la buse (6) et muni à son extrémité inférieure d'une évacuation, et un groupe de pompage haute pression disposé sous la table de découpe (8) et connecté à l'extrémité libre de la tubulure (7).

14. Machine de découpe (1) par jet d'eau selon l'une quelconque des revendications 11 à 13, **caractérisée en ce qu'**elle comporte un capot (9) articulé au bâti (4) permettant d'avoir une zone de travail complètement fermée et étanche au fluide et au bruit.

15. Machine de découpe (1) par jet d'eau selon la revendication 14, **caractérisée en ce que** le capot 9 est au moins en partie réalisé dans un matériau transparent.

## Patentansprüche

1. Vorrichtung (2, 20) zum Bewegen in einer Ebene P einer Platte (3) parallel zu ihr selbst, wobei die Platte (3) mindestens zwei entgegengesetzte zueinander parallele Ränder (31, 32) umfasst, wobei die Vorrichtung (2) **dadurch gekennzeichnet ist, dass** sie mindestens Folgendes umfasst:
- zwei Arme (21, 22), die zueinander parallel und in einer Ebene parallel zu der Ebene P beweglich sind, wobei der eine (21) der zwei Arme (21, 22) "Master" genannt wird und direkt von einem ersten Aktuator (23, 203) in Bewegung versetzt wird, wobei der andere (22), "Slave" genannt, von dem "Master"-Arm (21) dank eines Verbindungsorgans (24), das den "Master"-(21) und den "Slave"-Arm (22) miteinander verbindet, in Bewegung angetrieben wird, wobei das Verbindungsorgan (24) an jedem seiner Enden an dem "Master"- (21) und dem "Slave"-Arm (22) um Achsen (241) senkrecht zu der Ebene P angelenkt ist,
- ein Antriebsorgan (25), das an einem der Enden jedes der Arme (21, 22) um eine Achse (251) senkrecht zu der Ebene P schwenkend montiert ist und von einem zweiten Aktuator (26) in Bewegung versetzt wird, wobei das Antriebsorgan (25), das mit dem "Master"-Arm (21) assoziiert ist, mit einem Betätigungsorgan (33), das entlang des Rands (31) der Platte (3) angeordnet ist, zusammenwirkt, und das Antriebsorgan (25), das mit dem "Slave"-Arm (22) assoziiert ist, mit einem Betätigungsorgan (33), das entlang des anderen Rands (32) der Platte (3) angeordnet ist, zusammenwirkt.

2. Vorrichtung (2) zum Bewegen nach Anspruch 1, **dadurch gekennzeichnet, dass** jeder der zwei Arme (21, 22) an seinem Ende, das dem Antriebsorgan (25) entgegengesetzt ist, jeweils um eine Achse (211, 221) senkrecht zu der Ebene P schwenkend ist.

3. Vorrichtung (2) zum Bewegen nach Anspruch 2, **dadurch gekennzeichnet, dass** der erste Aktuator (23) ein elektrischer Getriebemotor ist.

4. Vorrichtung (20) zum Bewegen nach Anspruch 1, **dadurch gekennzeichnet, dass** jeder der zwei Arme (21, 22) an seinem Ende, das dem Antriebsorgan (25) entgegengesetzt ist, gemäß einer Richtung D senkrecht zu den zwei Rändern (31, 32) der Platte (3) gleitend ist.

5. Vorrichtung (20) zum Bewegen nach Anspruch 4, **dadurch gekennzeichnet, dass** der erste Aktuator (203) ein linearer Aktuator ist.

6. Vorrichtung (2, 20) zum Bewegen nach einem der Ansprüche 1 bis 5, **dadurch gekennzeichnet, dass** das Verbindungsorgan (24) einen linearen Aktuator (242) umfasst, der ein permanentes Nachstellen von Spiel zwischen dem "Master"- (21) und dem "Slave"-Arm (22) und daher zwischen den Betätigungsorganen (33) der Platte (3) und den Antriebsorganen (25) erlaubt.

7. Vorrichtung (2, 20) zum Bewegen nach Anspruch 6, **dadurch gekennzeichnet, dass** der lineare Aktuator (242) ein Zylinder vom pneumatischen einfach wirkenden Typ ist.

8. Vorrichtung (2, 20) zum Bewegen nach einem der Ansprüche 1 bis 7, **dadurch gekennzeichnet, dass** die Betätigungsorgane (33) der Platte (3) Zahnstangen sind, und dadurch, dass jedes Antriebsorgan (25), das mit dem assoziierten Betätigungsorgan (33) zusammenwirkt, ein Zahnkranz ist.

9. Vorrichtung (2, 20) zum Bewegen nach einem der Ansprüche 1 bis 8, **dadurch gekennzeichnet, dass** der "Master"- (21) und der "Slave"-Arm (22) Hohlröhren sind.

10. Vorrichtung (2, 20) zum Bewegen nach Anspruch 9, **dadurch gekennzeichnet, dass** jeder zweite Aktuator (26) ein elektrischer Getriebemotor ist, der von einem Kabel versorgt ist, das in dem Inneren eines des assoziierten "Master"- (21) oder des "Slave"-Arms (22) verläuft.

11. Flüssigkeitsstrahl-Schneidmaschine (1), die mindestens ein Gestell (4), einen Schneidkopf (5), der mit mindestens einer unbeweglichen Düse (6), die fest mit dem Gestell (4) verbunden ist, versehen ist, und einen Schneidtisch (8), der unter der Düse (6) angeordnet ist, umfasst, **dadurch gekennzeichnet, dass** sie eine Vorrichtung (2, 20) zum Bewegen einer Platte (3) in einer Ebene P parallel zu ihr selbst nach einem der Ansprüche 1 bis 10 umfasst, die fest mit dem Gestell (4) verbunden ist, und dadurch, dass der Schneidtisch (8) die Ebene P zum Bewegen der Platte (3) definiert.

12. Flüssigkeitsstrahl-Schneidmaschine (1) nach Anspruch 11, **dadurch gekennzeichnet, dass** jede Düse (6) mit Wasser unter Druck von einem starren Rohrstutzen (7) versorgt wird.

13. Flüssigkeitsstrahl-Schneidmaschine (1) nach einem der Ansprüche 11 oder 12, **dadurch gekennzeichnet, dass** sie einen Schneidwasserauffangbehälter, der unter dem Schneidtisch (8) vorteilhafterweise senkrecht zu der Düse (6) angeordnet und an seinem unteren Ende mit einem Abfluss versehen ist, und ein Hochdruck-Pumpaggregat, das unter dem Schneidtisch (8) angeordnet und mit dem freien Ende des Stutzens (7) verbunden ist, umfasst.

14. Flüssigkeitsstrahl-Schneidmaschine (1) nach einem der Ansprüche 11 bis 13, **dadurch gekennzeichnet, dass** sie eine Haube (9) umfasst, die auf dem Gestell (4) angelenkt ist, die es erlaubt, eine vollständig geschlossene und fluid- und schalldichte Arbeitszone zu haben.

15. Flüssigkeitsstrahl-Schneidmaschine (1) nach Anspruch 14, **dadurch gekennzeichnet, dass** die Haube (9) mindestens zum Teil aus einem durchsichtigen Werkstoff hergestellt ist.

## Claims

1. Device (2, 20) for moving a plate (3) parallel to itself in a plane P, said plate (3) comprising at least two opposite edges (31, 32) parallel to each other, said device (2) being **characterised in that** it comprises at least:
- two arms (21, 22) parallel to each other and able to move in a plane parallel to said plane P, one (21) of said two arms (21, 22) being called the "master" and directly moved by a first actuator (23, 203), the other (22) then called the "slave" being moved by the "master" arm (21) by means of a connection member (24) connecting together said "master" (21) and "slave" (22) arms, said connection member (24) being articulated at each of its ends on the "master" (21) and "slave" (22) arms about axes (241) perpendicular to said plane P,
- a drive member (25) mounted pivotally at one of the ends of each of said arms (21 22), about an axis (251) perpendicular to said plane P and moved by a second actuator (26), the drive member (25) associated with the "master" arm (21) cooperating with an actuation member (33) disposed along the edge (31) of the plate (3) and the drive member (25) associated with the "slave" arm (22) cooperating with an actuation member (33) disposed along the other edge (32) of the plate (3).

2. Movement device (2) according to claim 1, **characterised in that** each of the two arms (21, 22) pivots at its end opposite to the drive member (25) about an axis (211, 221) respectively perpendicular to said plane P.

3. Movement device (2) according to claim 2, **characterised in that** the first actuator (23) is a geared electric motor.

4. Movement device (20) according to claim 1, **characterised in that** each of the two arms (21, 22) is able slide at its end opposite to the drive member (25) in a direction D perpendicular to the two edges (31, 32) of the plate (3).

5. Movement device (20) according to claim 4, **characterised in that** the first actuator (203) is a linear actuator.

6. Movement device (2, 20) according to any of claims 1 to 5, **characterised in that** the connection member (24) comprises a linear actuator (242) affording a permanent takeup of clearance between the "master" (21) and "slave" (22) arms and therefore between the members (33) for actuating the plate (3) and the drive members (25).

7. Movement device (2, 20) according to claim 6, **characterised in that** the linear actuator (242) is a pneumatic cylinder of the single-acting type.

8. Movement device (2, 20) according to any of claims 1 to 7, **characterised in that** the members (33) for actuating the plate (3) are racks and **in that** each drive member (25) cooperating with the associated actuation member (33) is a notched pinion.

9. Movement device (2, 20) according to any of claims 1 to 8, **characterised in that** the "master" (21) and "slave" (22) arms are hollow tubes.

10. Movement device (2, 20) according to claim 9, **characterised in that** each second actuator (26) is a geared electric motor supplied by a cable routed inside one of the associated "master" (21) or "slave" (22) arms.

11. A waterjet cutting machine (1) comprising at least one frame (4), a cutting head (5) provided with at least one immobile nozzle (6) secured to said frame (4), and a cutting table (8) disposed under the nozzle (6), **characterised in that** it comprises a device (2, 20) for moving a plate (3) in a plane P parallel to itself according to any of claims 1 to 10 secured to said frame (4), and **in that** at the cutting table (8) defines said plane P of movement of the plate (3).

12. A waterjet cutting machine (1) according to claim 11, **characterised in that** each nozzle (6) is supplied with pressurised water by a rigid pipe (7).

13. A waterjet cutting machine (1) according to either claim 11 or claim 12, **characterised in that** it comprises a tank for recovering cutting water disposed under the cutting table (8) advantageously vertically in line with the nozzle (6) and provided at its bottom end with a discharge, and a high-pressure pumping unit disposed under the cutting table (8) and connected to the free end of the pipe (7).

14. A waterjet cutting machine (1) according to any of claims 11 to 13, **characterised in that** it comprises a cover (9) hinged on the frame (4), making it possible to have a working area that is completely closed and fluid- and noisetight.

15. A waterjet cutting machine (1) according to claim 14, **characterised in that** the cover (9) is at least partly produced from a transparent material.
